# EUROPÄISCHE PATENTSCHRIFT

(11) **EP 1 675 008 B1**
(45) Veröffentlichungstag und Bekanntmachung des Hinweises auf die Patenterteilung: **24.10.2018**
(21) Anmeldenummer: 05025975.3
(22) Anmeldetag: 29.11.2005
(51) Int. Cl.: G06F 12/02

(54) **Verwaltung von Datenobjekten in einem nichtflüchtigen überschreibbaren Speicher**
Management of data objects on non-volatile rewritable memory
Traitement d'objets de données dans une mémoire réinscriptible non-volatile

(30) Priorität: 23.12.2004 DE 102004062245
(43) Veröffentlichungstag der Anmeldung: 28.06.2006
(73) Patentinhaber: Giesecke+Devrient Mobile Security GmbH, 81677 München (DE)
(72) Erfinder: Rankl, Wolfgang, 81825 München (DE); Weiss, Dieter, 81677 München (DE)

(56) Entgegenhaltungen:
- WO-A-01/61703
- GB-A- 2 291 990
- US-A- 5 943 692
- US-A1- 2002 128 994
- US-A1- 2004 044 859

## Beschreibung

Die Erfindung betrifft das technische Gebiet der Speicherverwaltung für nichtflüchtige überschreibbare Speicher wie z.B. Flash-Speicher. Besonders eignet sich die Erfindung zur Verwendung in einem Betriebssystem eines tragbaren Datenträgers. Ein solcher tragbarer Datenträger kann z.B. eine Chipkarte (*Smart Card*) in unterschiedlichen Bauformen oder ein Chipmodul oder - in manchen Ausführungsformen der Erfindung - ein sonstiges ressourcenbeschränktes System sein.

Bei heute üblichen Mikrocontrollern für tragbare Datenträger ist der nichtflüchtige überschreibbare Speicher in der Regel als EEPROM ausgebildet. Zunehmend wird jedoch auch Flash-EEPROM-Speicher - im folgenden Flash-Speicher genannt - als nichtflüchtiger überschreibbarer Speicher eingesetzt. Verglichen mit herkömmlichem EEPROM benötigen Flash-Speicher weniger Chipfläche pro Speicherzelle und erlauben deutlich geringere Schreibzeiten.

Es ist eine gemeinsame Eigenschaft sowohl von EEPROM- als auch von Flash-Speicher, daß Speicherzellen durch einen Schreibvorgang nur von einem Grundzustand in einen beschriebenen Zustand überführt werden können. Eine beschriebene Speicherzelle kann dagegen nur dadurch wieder auf ihren Grundzustand zurückgesetzt werden, daß das gesamte Segment, in dem sich die Speicherzelle befindet, gelöscht wird. Diese physikalische Eigenschaft wirkt sich naturgemäß um so stärker aus, je größer die einzelnen Segmente sind, weil mit zunehmender Segmentgröße immer mehr Speicherzellen von einem Löschvorgang betroffen sind.

Bei modernen Chipkarten-Mikrocontrollern mit Flash-Speicher werden große Segmente verwendet, weil sich dadurch relativ zur benötigten Chipfläche eine hohe Speicherkapazität erzielen läßt. Typische Segmentgrößen betragen in der Größenordnung zwischen 2 kByte und 64 kByte. Hierdurch lassen sich z.B. mehr als 1 MByte Flash-Speicher in einem Chipkarten-Mikrocontroller üblicher Bauform unterbringen.

Es ist daher insbesondere bei der Verwendung von Flash-Speicher mit großen Segmenten wünschenswert, die Speicherverwaltung auf dem tragbaren Datenträger an die segmentweise Speicherorganisation und an die Tatsache, daß jeder Löschvorgang stets ein ganzes Segment betrifft, anzupassen. Eine solche Anpassung ist insbesondere für das Betriebssystem des Datenträgers wichtig, da dieses für die Dateiverwaltung und für diverse interne Funktionen - z.B. einen Interpreter oder eine virtuelle Maschine - eine leistungsfähige Verwaltung von Datenobjekten im nichtflüchtigen überschreibbaren Speicher benötigt.

Es ist bekannt, zur Ansteuerung von Flash-Speicher eine hardwarenahe Softwareschicht zu verwenden, die oft als *Flash Translation Layer* (FTL) bezeichnet wird. Der FTL übernimmt die physikalische Verwaltung des Flash-Speichers und stellt eine logische Schnittstelle bereit, die den Anforderungen des verwendeten Betriebssystems entspricht. Durch die Verwendung eines FTL können bestehende Betriebssysteme mit relativ geringem Aufwand zur Verwendung von Flash-Speicher eingerichtet werden. Auch für neu entwickelte Betriebssysteme bietet sich die Verwendung eines FTL aus Gründen der Modularität und besseren Wartbarkeit an.

EP 1139 210 B1 zeigt ein Speicherverwaltungsverfahren, bei dem jedes Segment eines Flash-Speichers in mehrere logische Sektoren unterteilt wird. Jeder nicht-leere logische Sektor enthält eine fest vorbestimmte Menge von Nutzdaten und einen Kopfdatensatz mit Zustands- und Verwaltungsinformationen. Um die Nutzdaten in einem logischen Sektor zu ändern, wird, falls möglich, ein bislang noch freier logischer Sektor mit den geänderten Nutzdaten und dem dazugehörigen Kopfdatensatz beschrieben. Ferner wird in den Kopfdatensatz desjenigen logischen Sektors, in dem die bisherigen Nutzdaten enthalten waren, ein Verweis auf den logischen Sektor mit den geänderten Nutzdaten eingetragen. Es wird somit eine einfach verkettete Verweisliste geschaffen, an deren Ende der logische Sektor mit den aktuellen Nutzdaten steht.

Bei dem Verfahren gemäß EP 1139 210 B1 besteht jedoch das Problem, daß bei einer Veränderung der Nutzdaten stets ein ganzer logischer Sektor mit dem Kopfdatensatz und den geänderten Nutzdaten neu beschrieben werden muß. Insbesondere bei großen logischen Sektoren ist dieser Schreibvorgang zeitaufwendig. Dieses Problem ist für das in EP 1139 210 B1 dargestellte Ausführungsbeispiel, bei dem der Umfang des Kopfdatensatzes im Vergleich zum Umfang der Nutzdaten nur gering ist, möglicherweise weniger kritisch. In anderen Konfigurationen, bei denen der Kopfdatensatz mehr Informationen oder wiederholt veränderbare Informationen enthält, würde sich eine Verwendung des in EP 1139 210 B1 beschriebenen Verfahrens durch ein Betriebssystem jedoch ungünstig bemerkbar machen.

Die Erfindung hat daher die Aufgabe, eine Technik zur möglichst zeiteffizienten Verwaltung von Datenobjekten in einem nichtflüchtigen überschreibbaren Speicher bereitzustellen. Insbesondere soll durch die Erfindung der Schreibzugriff und/oder der Lesezugriff auf die Datenobjekte beschleunigt werden. In bevorzugten Ausgestaltungen soll sich die Erfindung besonders zur Verwaltung von Datenobjekten in segmentweise organisierten Speichern mit großen Segmentgrößen eignen. Erfindungsgemäß wird diese Aufgabe ganz oder zum Teil gelöst durch ein Verfahren mit den Merkmalen des Anspruchs 1, einen tragbaren

Datenträger mit den Merkmalen des Anspruchs 1 und ein Computerprogrammprodukt mit den Merkmalen des Anspruchs 16. Die abhängigen Ansprüche betreffen bevorzugte Ausgestaltungen der Erfindung.

Die Erfindung geht von der Grundidee aus, Objektköpfe und Objektkörper von Datenobjekten getrennt zu verwalten. Durch diese Maßnahme braucht bei einer Änderung der in einem Objektkopf oder einem Objektkörper gespeicherten Daten nur dieser Objektkopf bzw. nur dieser Objektkörper - und nicht das gesamte Datenobjekt - neu in den nichtflüchtigen überschreibbaren Speicher eingeschrieben zu werden. Gerade bei häufigen Veränderungen wird dadurch erhebliche Schreibzeit eingespart.

Erfindungsgemäß ist ferner vorgesehen, für jedes Datenobjekt eine verkettete Objektkopfliste und eine verkettete Objektkörperliste zu führen. Diese Listen können einfach oder doppelt oder auf andere Weise verkettet sein. Der gültige Objektkopf bzw. der gültige Objektkörper eines Datenobjekts findet sich stets am Ende der jeweiligen Liste. Durch die Verwendung verketteter Listen kann der gültige Objektkopf bzw. der gültige Objektkörper schnell gefunden werden, indem die jeweilige Liste durchlaufen wird. Lesezugriffe auf Datenobjekte können damit viel effizienter ausgeführt werden als bei Verfahren, bei denen ausgehend von einer Wurzel und den bekannten Längen der einzelnen Datenobjekte der gesamte nichtflüchtige überschreibbare Speicher oder ein ganzes Segment dieses Speichers nach einem bestimmten Datenobjekt, das an seinem Objektbezeichner erkennbar ist, durchsucht wird.

In bevorzugten Ausführungsformen werden die Zeiger der verketteten Objektkopflisten und/oder Objektkörperlisten in Verweisfeldern gespeichert. Hierbei wird vorzugsweise die Tatsache ausgenutzt, daß unbeschriebene Bytes oder Wörter des nichtflüchtigen überschreibbaren Speichers jederzeit mit beliebigen Daten beschrieben werden können. Ein neuer Objektkopf oder ein neuer Objektkörper wird vorzugsweise mit einem unbeschriebenen Verweisfeld angelegt. Dieser Objektkopf oder Objektkörper steht somit am Listenende und wird daher als gültiger Objektkopf oder Objektkörper angesehen. Erst wenn die in diesem bisher gültigen Objektkopf oder Objektkörper enthaltenen Daten wieder verändert werden sollen, wird ein neuer Objektkopf oder Objektkörper angelegt, und ein Verweis auf diesen neuen Objektkopf oder Objektkörper wird in das bislang noch leere Verweisfeld des bisher gültigen Objektkopfes oder Objektkörpers eingetragen.

Vorzugsweise sind in jedem Objektkopf und jedem Objektkörper zwei Sicherungsfelder vorgesehen, von denen zu jedem Zeitpunkt nur eines gültig ist. Das erste Sicherungsfeld wird in bevorzugten Ausgestaltungen bei der Anlage eines Objektkopfes oder Objektkörpers mit einem geeigneten Sicherungscode beschrieben. Wenn dann zu einem späteren Zeitpunkt ein Verweis in den Objektkopf oder Objektkörper eingetragen wird, verliert das erste Sicherungsfeld seine Gültigkeit, und ein neuer Sicherungscode wird in das zweite Sicherungsfeld eingeschrieben.

In bevorzugten Ausgestaltungen enthalten die Objektköpfe Verwaltungs- und/oder Zustandsinformationen, während die Objektkörper Nutzdaten aufnehmen. Dies schließt nicht aus, daß weitere Daten in den Objektköpfen und/oder Objektkörpern enthalten sind.

Um Zugriffe auf die Datenobjekte im nichtflüchtigen überschreibbaren Speicher weiter zu beschleunigen, ist in manchen Ausführungsformen mindestens ein Cache mit einer Mehrzahl von Einträgen vorgesehen. Vorzugsweise enthält jeder Eintrag einen Objektbezeichner und eine Adresse des entsprechenden Datenobjekts im nichtflüchtigen überschreibbaren Speicher. Die Entscheidung, welche Einträge in den mindestens einen Cache aufgenommen werden sollen, kann aufgrund statischer und/oder dynamischer Kriterien getroffen werden. Die Verwendung mindestens eines Caches zur Beschleunigung von Schreib- und/oder Lesezugriffen wird in manchen Ausgestaltungen als eigenständige Erfindung angesehen, die unabhängig von der Unterscheidung zwischen Objektköpfen und Objektkörpern und unabhängig von der Verwendung verketteter Objektkopflisten und/oder Objektkörperlisten ist.

In bevorzugten Ausführungsformen ist der nichtflüchtige überschreibbare Speicher ein Flash-Speicher. Die Erfindung kann jedoch auch für andere nichtflüchtige überschreibbare Speicher benutzt werden, insbesondere solche, die in große Segmente untergliedert sind und/oder die ein ähnliches Schreib-/Löschverhalten wie Flash-Speicher aufweisen.

Das erfindungsgemäße Computerprogrammprodukt enthält Programmbefehle, um das erfindungsgemäße Verfahren zu implementieren. Ein derartiges Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann das Computerprogrammprodukt bei der Herstellung oder Initialisierung oder Personalisierung eines tragbaren Datenträgers eingesetzt werden.

Der erfindungsgemäße Datenträger ist zum Ausführen des erfindungsgemäßen Verfahrens eingerichtet und/oder enthält erfindungsgemäße Datenstrukturen.

In bevorzugten Ausgestaltungen weist/weisen der Datenträger und/oder das Computerprogrammprodukt Merkmale auf, die den gerade beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung mehrerer Ausführungsbeispiele und Ausführungsalternativen hervor. Es wird auf die schematischen Zeichnungen verwiesen, in denen zeigen:
Fig. 1 ein Blockdiagramm mit Komponenten eines tragbaren Datenträgers nach einem Ausführungsbeispiel der Erfindung,
Fig. 2 eine schematische Darstellung eines neu angelegten Datenobjekts,
Fig. 3 eine schematische Darstellung des Datenobjekts von Fig. 2 nach einer ersten Veränderung der Nutzdaten,
Fig. 4 eine schematische Darstellung des Datenobjekts von Fig. 3 nach einer zweiten Veränderung der Nutzdaten,
Fig. 5 eine schematische Darstellung des Datenobjekts von Fig. 4 nach einer ersten Veränderung der im Objektkopf gespeicherten Informationen, und
Fig. 6 und Fig. 7 zwei alternative Ausgestaltungen eines Eintrags in einem Cache.

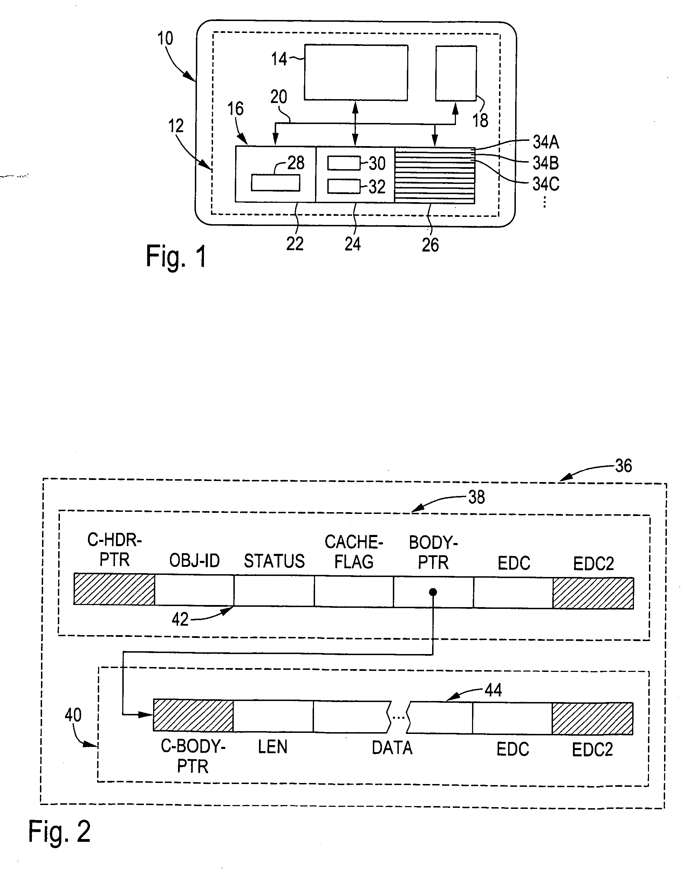

Der in Fig. 1 gezeigte Datenträger 10 weist einen Mikrocontroller 12 auf. In an sich bekannter Weise sind in dem Mikrocontroller 12 auf einem einzigen Halbleiterchip ein Prozessor 14, eine Speicherbaugruppe 16 und eine Schnittstellenschaltung 18 zur kontaktgebundenen oder kontaktlosen Kommunikation integriert und über einen Bus 20 miteinander verbunden. Die Speicherbaugruppe 16 weist mehrere Speicherfelder auf, nämlich einen Programmspeicher 22, einen Arbeitsspeicher 24 und einen nichtflüchtigen überschreibbaren Speicher 26.

Der Programmspeicher 22 ist als maskenprogrammiertes ROM oder als Flash-Speicher ausgestaltet, das ein Betriebssystem 28 und in manchen Ausführungsbeispielen auch fest installierte Anwendungsprogramme enthält.

Der Arbeitsspeicher 24 ist ein flüchtiges RAM, in dem während des Betriebs des Datenträgers 10 temporäre Daten aller Art gespeichert werden. Im Zusammenhang mit den hier beschriebenen Ausführungsbeispielen ist insbesondere von Bedeutung, daß im Arbeitsspeicher 24 ein statischer Cache 30 und ein dynamischer Cache 32 unterhalten werden. Die Nutzung dieser Cache-Bereiche wird unten noch genauer erläutert.

Der nichtflüchtige überschreibbare Speicher 26 ist als Flash-Speicher ausgestaltet, der hardwaremäßig in Segmente 34A, 34B, 34C ... - im folgenden zusammenfassend mit 34x bezeichnet - unterteilt ist. Der nichtflüchtige überschreibbare Speicher 26 ist in der eingangs beschriebenen Weise zwar bitweise beschreibbar; jedes Segment 34x kann jedoch nur als Ganzes gelöscht werden.

Das Betriebssystem 28 beinhaltet einen Mechanismus zur Verwaltung von Datenobjekten aller Art im nichtflüchtigen überschreibbaren Speicher 26. In unterschiedlichen Ausführungsformen kann dieser Mechanismus eng in das Betriebssystem 28 integriert oder als relativ unabhängige, hardwarenahe Treiberschicht - ein *Flash Translation Layer* - ausgestaltet sein. Die Datenobjekte enthalten im vorliegenden Ausführungsbeispiel beliebige Nutzdaten variabler Länge, deren Struktur und Bedeutung für die hier beschriebene Objektverwaltung keine Rolle spielt. Beispielsweise können in den Nutzdaten Verwaltungsinformationen und Dateninhalte eines Dateisystems nach der Norm ISO/IEC 7816-4 oder Verwaltungsinformationen und Objektinhalte einer Java-Card™-Laufzeitumgebung gespeichert sein.

Fig. 2 zeigt den Aufbau eines neu angelegten und noch nicht veränderten Datenobjekts 36 in einem Segment 34x des nichtflüchtigen überschreibbaren Speichers 26. Konzeptuell besteht das Datenobjekt 36 aus einer Objektkopfliste 38 und einer Objektkörperliste 40. In der in Fig. 2 dargestellten Anfangskonfiguration beinhalten die Objektkopfliste 38 und die Objektkörperliste 40 jedoch nur je ein Listenelement, nämlich einen gültigen Objektkopf 42 und einen gültigen Objektkörper 44.

Der Objektkopf 42 und der Objektkörper 44 enthalten jeweils eine Reihe von Datenfeldern, deren Funktion im folgenden genauer erläutert wird. Im hier beschriebenen Ausführungsbeispiel sind im Objektkopf 42 die Datenfelder C-HDR-PTR, OBJ-ID, STATUS, CACHE-FLAG, BODY-PTR, EDC und EDC2 vorgesehen, und der Objektkörper 44 enthält die Datenfelder C-BODY-PTR, LEN, DATA, EDC und EDC2. In den Bezeichnungen C-HDR-PTR und C-BODY-PTR steht das "C" für *"consecutive".* Es versteht sich, daß in alternativen Ausgestaltungen zusätzliche oder andere Datenfelder vorgesehen sein können.

Manche der Datenfelder des Datenobjekts 36 befinden sich in ihrem gelöschten Grundzustand; je nach dem physikalischen Aufbau des nichtflüchtigen überschreibbaren Speichers 26 enthalten diese Datenfelder also ausschließlich "0"-Bits oder ausschließlich "1"-Bits. Diese leeren, im Grundzustand befindlichen Datenfelder sind in den Figuren schraffiert gezeigt. Diese Datenfelder sind dazu vorgesehen, zu einem späteren Zeitpunkt beschrieben zu werden, ohne daß dabei ein Löschvorgang erforderlich wäre.

Es wird nun zunächst auf den Objektkörper 44 eingegangen. Dessen Verweisfeld C-BODY-PTR ist in der in Fig. 2 gezeigten Anfangskonfiguration leer. Hierdurch wird der Objektkörper 44 als gültig gekennzeichnet. Ein nicht-leeres Verweisfeld C-BODY-PTR würde dagegen anzeigen, daß der entsprechende Objektkörper ungültig ist; der in diesem Feld enthaltene Zeiger würde dann auf den nächsten Objektkörper in der Objektkörperliste 40 verweisen.

Das Feld DATA enthält die Nutzdaten des Objektkörpers 44. Da der Umfang dieser Nutzdaten - und damit die Größe des Objektkörpers 44 - nicht fest vorbestimmt ist, wird im Feld LEN die Länge des Objektkörpers 44 - oder in Ausführungsalternativen die Länge des Nutzdatenfeldes DATA - angegeben.

Die beiden Sicherungsfelder EDC und EDC2 des Objektkörpers 44 sind zur Aufnahme je eines Sicherungscodes vorgesehen. Im vorliegenden Ausführungsbeispiel ist der Sicherungscode ein Fehlererkennungscode, z.B. eine Prüfsumme. In Ausführungsalternativen kann jedoch auch ein Fehlerkorrekturcode als Sicherungscode dienen. Die Sicherungscodes werden auf an sich bekannte Weise verwendet, um Speicherfehler in den Datenfeldern des Objektkörpers 44 zu erkennen. Zu jedem Zeitpunkt ist jedoch nur einer der beiden in den Sicherungsfeldern EDC und EDC2 gespeicherten Sicherungscodes gültig.

Das erste Sicherungsfeld EDC dient solange zur Absicherung der Daten im Objektkörper 44, wie das Verweisfeld C-BODY-PTR leer und somit der Objektkörper 44 gültig ist. Dies ist z.B. in dem in Fig. 2 gezeigten Anfangszustand der Fall. Solange das erste Sicherungsfelder EDC gültig ist, bleibt das zweite Sicherungsfelder EDC2 leer.

Wenn dagegen im Zuge einer Änderung des Objektkörpers 44 ein Eintrag in dem Verweisfeld C-BODY-PTR angelegt wird, ändert sich naturgemäß auch der zugehörige Sicherungscode. Der neue Sicherungscode wird in das zweite Sicherungsfeld EDC2 eingetragen. Dies ist problemlos möglich, da sich das zweite Sicherungsfeld EDC2 bislang noch im Grundzustand befunden hat. Von diesem Zeitpunkt an wird der Inhalt des zweiten Sicherungsfeldes EDC2 zur Sicherung der Datenintegrität verwendet.

Analog zu der gerade für den Objektkörper 44 beschriebenen Vorgehensweise werden die beiden Sicherungsfelder EDC und EDC2 des Objektkopfes 42 zur Überprüfung des Objektkopfes 42 auf Speicherfehler verwendet. Auch hier wird also das erste Sicherungsfeld EDC herangezogen, solange das Verweisfeld C-HDR-PTR leer ist, und nach dem Beschreiben dieses Verweisfeldes C-HDR-PTR wird ein neuer Sicherungscode berechnet und in das zweite Sicherungsfeld EDC2 eingetragen. Ein leeres Verweisfeld C-HDR-PTR des Objektkopfes 42 zeigt - ebenfalls analog zur oben beschriebenen Bedeutung des Verweisfeldes C-BODY-PTR des Objektkörpers 44 - an, daß der Objektkopf 42 gültig ist. Ein Eintrag in dem Verweisfeld C-HDR-PTR, nämlich ein Zeiger auf den nächsten Objektkopf in der Objektkopfliste 38, würde dagegen auf einen ungültigen Objektkopf 42 hinweisen.

Das Feld OBJ-ID des Objektkopfes 42 enthält einen Objektbezeichner, der zur eindeutigen Identifikation des Datenobjekts 36 dient.

Das Feld STATUS ist zur Aufnahme von Zustandsinformationen über das Datenobjekt 36 - z.B. aktiv, gelöscht, ungültig, ... - vorgesehen. In manchen Ausgestaltungen können diese Zustandsinformationen so kodiert sein, daß bei jedem in der Praxis vorkommenden Zustandsübergang im Feld STATUS jeweils nur Bits beschrieben werden, die sich vorher in ihrem Grundzustand befunden haben. Diese Zustandsübergänge können dann ohne einen Löschvorgang in das Feld STATUS eingetragen werden. Wenn eine solche Änderungsmöglichkeit des Feldes STATUS vorgesehen ist, müssen jedoch geeignete Vorkehrungen zur Absicherung gegen Speicherfehler getroffen werden, weil die Sicherungscodes in den Feldern EDC und EDC2 ein derartig änderbares Feld STATUS nicht abdecken könnten.

Das Feld CACHE-FLAG gibt an, ob ein Zeiger auf das Datenobjekt 36 in dem statischen Cache 30 gehalten werden soll. Hierauf wird später noch genauer eingegangen.

Das Feld BODY-PTR enthält einen Verweis auf einen Objektkörper in der Objektkörperliste 40. In der in Fig. 2 gezeigten Anfangskonfiguration verweist der in dem Feld BODY-PTR enthaltene Zeiger auf den einzigen in der Objektkörperliste 40 enthaltenen Objektkörper 44.

Der Speicherverwaltungsmechanismus der vorliegend beschriebenen Ausführungsbeispiele ist an die Ausgestaltung des nichtflüchtigen überschreibbaren Speichers 26 als Flash-Speicher insofern angepaßt, als Löschvorgänge möglichst vermieden werden. Um den Inhalt einer Datenstruktur zu ändern, wird vielmehr eine neue Datenstruktur in dem nichtflüchtigen überschreibbaren Speicher 26 angelegt, und die bisherige Datenstruktur wird als ungültig markiert. Erst wenn der verfügbare Speicherplatz zur Neige geht, wird durch geeignete - an sich bekannte - Maßnahmen ein Segment 34x geleert und gelöscht.

Es ist eine Besonderheit der vorliegend beschriebenen Ausführungsbeispiele, daß die gerade kurz umrissene Speicherverwaltung nicht mit ganzen Datenobjekten - z.B. 36 - als kleinster Verwaltungseinheit, sondern einerseits mit Objektköpfen - z.B. 42 - und andererseits mit Objektkörpern - z.B. 44 - durchgeführt wird. Wenn daher z.B. eine Datenänderung nur den Objektkörper 44 betrifft, so braucht lediglich der geänderte Objektkörper neu in den nichtflüchtigen überschreibbaren Speicher 26 eingeschrieben zu werden. Durch diese Maßnahme wird nicht nur Schreibzeit, sondern auch Speicherplatz eingespart, und der Speicher 26 wird weniger durch Schreibvorgänge belastet.

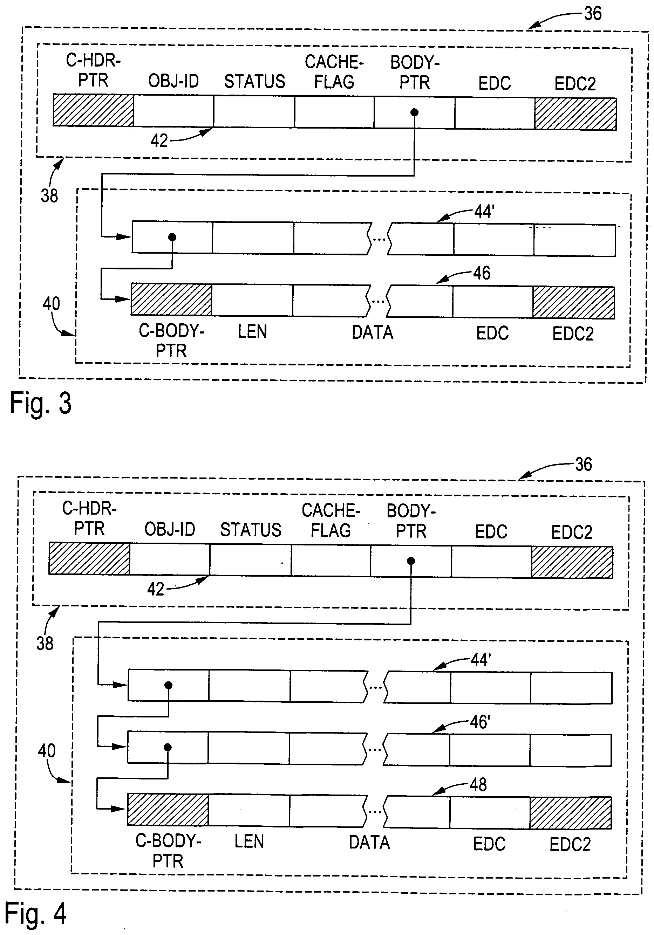

Fig. 3 zeigt beispielhaft das Ergebnis eines Speicherverwaltungsvorgangs, bei dem das Betriebssystem 28 beauftragt wurde, die Nutzdaten des Datenobjekts 36 zu verändern. Um einen Löschvorgang zu vermeiden, hat das Betriebssystem 28 - beziehungsweise der darin enthaltene *Flash Translation Layer* - einen neuen Objektkörper 46 mit den geänderten Nutzdaten im Feld DATA angelegt. Dieser neue Objektkörper 46 ist dadurch als gültig gekennzeichnet, daß sein Verweisfeld C-BODY-PTR leer ist. Weiter enthält das erste Sicherungsfeld EDC des neuen Objektkörpers 46 einen neu berechneten Sicherungscode; das zweite Sicherungsfeld EDC2 ist leer.

Das Betriebssystem 28 hat ferner in das Verweisfeld C-BODY-PTR des vorher gültigen Objektkörpers 44 (Fig. 2) einen Verweis auf den neuen Objektkörper 46 eingetragen und das zweite Sicherungsfeld EDC2 mit einem neu berechneten Sicherungscode beschrieben. Der so veränderte frühere Objektkörper 44 (Fig. 2) ist in Fig. 3 mit dem Bezugszeichen 44' versehen. Durch die Tatsache, daß sich das Verweisfeld C-BODY-PTR des Objektkörpers 44' nicht mehr im Grundzustand befindet, wird der Objektkörper 44' als ungültig gekennzeichnet. Die im Feld DATA des Objektkörpers 44' enthaltenen Nutzdaten sind gegenüber dem Ausgangszustand (Fig. 2) unverändert geblieben, jedoch nicht mehr gültig.

Insgesamt enthält die Objektkörperliste 40 gemäß Fig. 3 nun zwei Einträge, nämlich den ungültigen Objektkörper 44' als erstes Listenelement und den gültigen Objektkörper 46 als zweites und letztes Listenelement. Die Listenelemente sind über den Zeiger im Verweisfeld C-BODY-PTR des ersten Objektkörpers 44' miteinander verknüpft.

In Fig. 4 ist die Repräsentation des Datenobjekts 36 im nichtflüchtigen überschreibbaren Speicher 26 nach einer weiteren Veränderung der Nutzdaten gezeigt. Wieder wurde ein neuer gültiger Objektkörper 48 angelegt. Die Felder C-BODY-PTR und EDC2 des bisher gültigen Objektkörpers 46 (Fig. 3) wurden auf die oben beschriebene Weise belegt; die resultierende Datenstruktur ist in Fig. 4 als Objektkörper 46' gezeigt. Die Objektkörperliste 40 enthält nun drei Einträge, deren letzter der gültige Objektkörper 48 ist.

Eine Veränderung des Objektkopfes - z.B. 42 - kann erforderlich werden, wenn eine neue Zustandsangabe in das Feld STATUS eingetragen werden soll oder wenn sich anderen Verwaltungsinformationen, die in den Figuren nicht gezeigt sind, ändern. In diesem Fall wird analog zur bereits ausführlich beschriebenen Änderung des Objektkörpers verfahren.

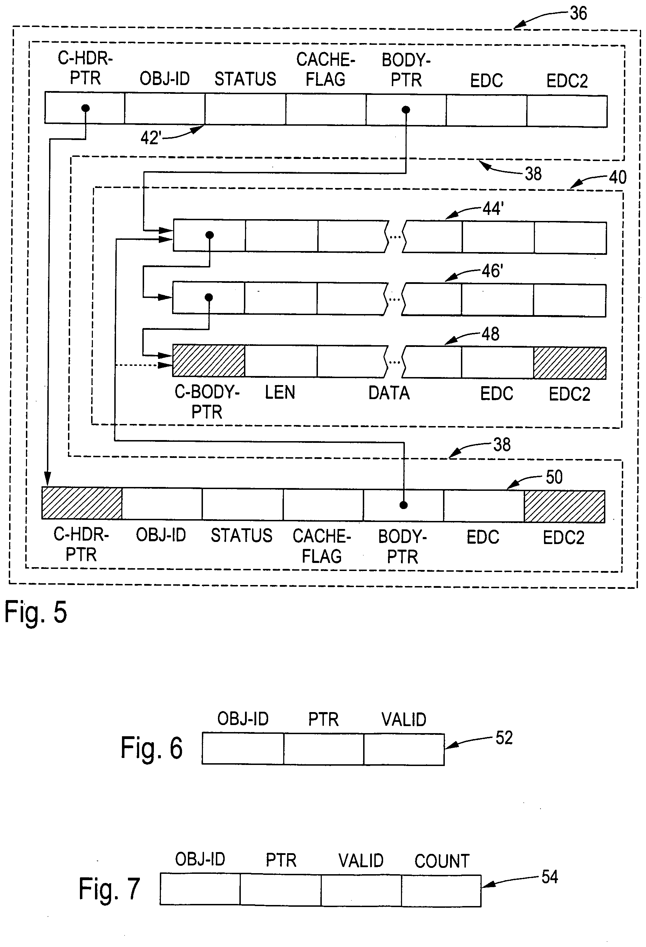

Fig. 5 zeigt beispielhaft die Repräsentation des Datenobjekts 36 im nichtflüchtigen überschreibbaren Speicher 26, nachdem ein neuer gültiger Objektkopf 50 angelegt wurde. In dem bisherigen Objektkopf 42 (Fig. 2) wurden die Felder C-HDR-PTR und EDC2 auf die oben beschriebene Weise belegt; die neue Konfiguration ist in Fig. 5 mit dem Bezugszeichen 42' versehen. Die Objektkopfliste 38 weist nun zwei Einträge auf, nämlich den ungültigen Objektkopf 42' als erstes Listenelement und den gültigen Objektkopf 50 als zweites und letztes Listenelement. Es versteht sich, daß das gerade beschriebene Verfahren bei weiteren Veränderungen des Objektkopfes 50 und/oder des Objektkörpers 48 beliebig fortgesetzt werden kann.

In der beispielhaften Darstellung von Fig. 5 zeigt der Verweis im Feld BODY-PTR des gültigen Objektkopfs 50 auf den ersten, ungültigen Eintrag in der Objektkörperliste 44. In Ausführungsalternativen kann dagegen in jeden neu angelegten Objektkopf 50 sogleich ein Verweis auf den gegenwärtig gültigen Objektkörper 48 eingetragen werden, wie dies in Fig. 5 durch einen gestrichelten Pfeil angedeutet ist.

Fig. 5 veranschaulicht auch, daß die gültigen und ungültigen Objektköpfe und Objektkörper eines Datenobjekts 36 im nichtflüchtigen überschreibbaren Speicher 26 in beliebiger Reihenfolge - gegebenenfalls auch mit Lücken oder mit Strukturen anderer Datenobjekte verzahnt - angeordnet sein können.

Wenn in der Konfiguration von Fig. 5 ein Lesezugriff auf das Datenobjekt 36 erfolgt, identifiziert das Betriebssystem 28 zunächst den ersten Objektkopf 42 anhand des Objektbezeichners im Feld OBJ-ID und durchläuft dann die Objektkopfliste 38, bis der gültige Objektkopf 50, also der letzte Eintrag in der Objektkopfliste 38, erreicht ist. Das Betriebssystem 28 folgt dann dem im Feld BODY-PTR eingetragenen Zeiger und durchläuft schließlich die Objektkörperliste 40, bis der letzte - definitionsgemäß gültige - Objektkörper 48 in dieser Liste erreicht ist. Die Nutzdaten im Feld DATA dieses Objektkörpers 48 werden ausgelesen.

Aus Fig. 5 geht hervor, daß die Daten im nichtflüchtigen überschreibbaren Speicher 26 nicht nur den gegenwärtigen Zustand des Datenobjekts 36, sondern auch die vorherigen Zustände widerspiegeln. In manchen Ausgestaltungen wird diese Tatsache ausgenutzt, um eine Funktionalität zur Wiederherstellung früherer Zustände im Fehlerfall bereitzustellen. Insbesondere kann auf diese Weise ein Rückführmechanismus (*roll back*) für abgebrochene Transaktionen mit verhältnismäßig geringem Aufwand implementiert werden.

Die Verwendung von Verweisen in den Feldern C-HDR-PTR, BODY-PTR und C-BODY-PTR beschleunigt den Zugriff auf Datenobjekte 36, weil ein wiederholtes Durchsuchen des gesamten nichtflüchtigen überschreibbaren Speichers 26 nach gültigen Objektköpfen 42, 50 und gültigen Objektkörpern 44, 46, 48 vermieden wird. Allerdings ist es nach wie vor aufwendig, für einen gegebenen Objektbezeichner einen Objektkopf 42, 42', 50 mit einem passenden Eintrag im Feld OBJ-ID zu finden. Um auch hier ein zeitaufwendiges Durchsuchen des nichtflüchtigen überschreibbaren Speichers 26 möglichst zu vermeiden, ist in den hier beschriebenen Ausführungsbeispielen ein Cache-Mechanismus vorgesehen, der Objektbezeichnern geeignete Zieladressen von zugehörigen Datenstrukturen im nichtflüchtigen überschreibbaren Speicher 26 zuordnet.

In den hier beschriebenen Ausführungsbeispielen beinhaltet der Cache-Mechanismus den statischen Cache 30 und den dynamischen Cache 32, die jeweils eine Reihe von Einträgen aufweisen. Es versteht sich, daß in Ausführungsalternativen nur der statische Cache 30 oder nur der dynamische Cache 32 oder andere Cache-Strukturen vorgesehen sein können.

Fig. 6 zeigt einen Eintrag 52, wie er in einer Ausführungsform sowohl im statischen Cache 30 als auch im dynamischen Cache 32 enthalten ist. Der Eintrag 52 enthält Felder für einen Objektbezeichner OBJ-ID, einen Verweis PTR und eine Gültigkeitsangabe VALID. Jeder Eintrag 52 ist einem Datenobjekt 36 zugeordnet, nämlich demjenigen Datenobjekt 36, dessen Objektbezeichner OBJ-ID mit dem im Eintrag 52 angegebenen Objektbezeichner OBJ-ID übereinstimmt. Die Gültigkeitsangabe VALID kennzeichnet, ob der jeweilige Eintrag 52 gültig ist.

Der Verweis PTR eines Eintrags 52 zeigt auf eine geeignete Datenstruktur des Datenobjekts 36. In manchen Ausgestaltungen kann z.B. der Verweis PTR stets auf den ersten - möglicherweise ungültigen - Objektkopf in der Objektkopfliste 38 zeigen. In Ausführungsalternativen kann dagegen vorgesehen sein, bei jedem Anlegen eines neuen Objektkopfes den Verweis PTR im zugeordneten Eintrag 52 zu aktualisieren, so daß der Verweis PTR stets auf den letzten - gültigen - Objektkopf in der Objektkopfliste 38 zeigt. Schließlich sind auch Ausführungsformen möglich, in denen der Verweis PTR unmittelbar auf einen Objektkörper - z.B. den ersten Objektkörper in der Objektkörperliste 40 oder den jeweils gültigen Objektkörper - zeigt.

Beim Zugriff auf ein Datenobjekt 36 mit einem gegebenen Objektbezeichner OBJ-ID durchsucht das Betriebssystem 28 zunächst die beiden Caches 30, 32 nach einem passenden und gültigen Eintrag 52. Wird ein solcher Eintrag 52 gefunden, dann kann ohne weitere Suche unmittelbar auf das Datenobjekt 36 zugegriffen werden. Nur wenn die Caches 30, 32 keinen geeigneten Eintrag 52 enthalten, wird die zeitaufwendige Suche im nichtflüchtigen überschreibbaren Speicher 26 durchgeführt.

Der statische Cache 30 enthält eine vorgegebene Anzahl von Einträgen 52. Das Feld CACHE-FLAG im Objektkopf - z.B. 42 - gibt an, ob beim ersten Zugriff auf das zugehörige Datenobjekt 36 ein entsprechender Eintrag 52 im statischen Cache 30 angelegt werden soll. Das Betriebssystem 28 prüft bei jedem ersten Zugriff auf ein Datenobjekt 36, ob das Feld CACHE-FLAG einen aktiven Wert enthält. Wenn dies der Fall ist, so wird der Eintrag 52 mit dem Objektbezeichner OBJ-ID im statischen Cache 30 angelegt. In dem Feld PTR dieses Eintrags 52 wird die Anfangsadresse des Datenobjekts 36 - oder in Ausführungsvarianten ein anderer geeigneter Verweis - gespeichert.

Der statische Cache-Mechanismus beschleunigt den Zugriff auf Datenobjekte 36, deren häufige Verwendung vorhersehbar ist. Dies können insbesondere Puffer sein, z.B. SMS-Puffer für Browser-Anwendungen oder erweiterte Puffer für Übertragungsprotokolle.

Allerdings kann nur dann eine sinnvolle Entscheidung über die Belegung des Kennzeichens im Feld CACHE-FLAG getroffen werden, wenn bereits bei der Anlage eines Datenobjekts 36 die voraussichtliche Häufigkeit der Zugriffe auf dieses Datenobjekt 36 bekannt ist. Dies ist jedoch nicht immer der Fall. Um auch Zugriffe auf andere Datenobjekte 36 effizient ausführen zu können, ist im vorliegenden Ausführungsbeispiel ferner ein dynamischer Cache-Mechanismus vorgesehen, der den dynamischen Cache 32 im Arbeitsspeicher 24 einsetzt.

Allgemein versucht der dynamische Cache-Mechanismus, Zeiger auf diejenigen Datenobjekte 36, auf die häufig zugegriffen wird, im dynamischen Cache 32 zu halten. Die Belegung des dynamischen Cache 32 soll sich zur Programmlaufzeit möglichst genau an das tatsächliche Zugriffsverhalten anpassen, ohne daß vorausbestimmte statische Kennzeichen - wie z.B. das Feld CACHE-FLAG - benötigt werden. Hierfür können diverse Cache-Strategien eingesetzt werden.

In einer besonders einfachen Cache-Strategie kann der dynamische Cache 32 als zyklische Liste der letzten Zugriffe auf Datenobjekte 36 ausgestaltet sein; jedes Element in dieser Liste ist ein Eintrag 52 mit den oben beschriebenen Inhalten. Zum Zugriff auf ein Datenobjekt 36 durchsucht das Betriebssystem 28 dann zunächst die beiden Caches 30, 32 nach einem Eintrag 52 mit dem passenden Objektbezeichner OBJ-ID. Wird ein solcher Eintrag 52 gefunden, kann über den im Eintrag 52 enthaltenen Verweis PTR unmittelbar auf das Datenobjekt 36 zugegriffen werden; andernfalls muß der nichtflüchtige überschreibbare Speicher 26 durchsucht werden. In beiden Fällen wird der Zugriff als jüngster Eintrag 52 in die zyklische Liste, die den dynamischen Cache 32 bildet, aufgenommen. Der bislang älteste Listeneintrag wird dabei überschrieben, und ein Listenzeiger wird um eine Position weitergeschaltet. In Ausführungsalternativen können geeignete Vorkehrungen getroffen werden, um doppelte Einträge im dynamischen Cache 32 zu vermeiden.

Fig. 7 zeigt einen erweiterten Eintrag 54, der in manchen Ausführungsformen für den dynamischen Cache 32 verwendet wird. Der erweiterte Eintrag 54 weist als zusätzliches Datenfeld einen Zähler COUNT auf, der die Anzahl der Zugriffe auf das dem Eintrag 54 zugeordnete Datenobjekt 36 im nichtflüchtigen überschreibbaren Speicher 26 protokolliert. Mit dieser zusätzlichen Information kann eine erweiterte Cache-Strategie implementiert werden, bei der bei jedem Zugriff auf ein Datenobjekt 36, das noch nicht in den Caches 30, 32 verzeichnet ist, der Eintrag 54 mit der geringsten bisherigen Zugriffsanzahl überschrieben wird. Diese Cache-Strategie verbessert in der Regel die Cache-Trefferquote, weil die im dynamischen Cache 32 enthaltenen Einträge 54 genauer der tatsächlichen Häufigkeit der Zugriffe auf die Datenobjekte 36 entsprechen.

Es versteht sich, daß in weiteren Ausführungsalternativen andere oder abgewandelte Cache-Strategien verwendet werden können. Ferner kann durch Vergrößern oder Verkleinern der Anzahl der Einträge 52, 54 in den Caches 30, 32 die effektive Zugriffsgeschwindigkeit auf den nichtflüchtigen überschreibbaren Speicher 26 innerhalb gewisser Grenzen gesteigert oder verringert werden. Hierbei muß natürlich auch die Größe des zur Verfügung stehenden Arbeitsspeichers 24 berücksichtigt werden.

Bei der Verwaltung der Caches 30, 32 ist ferner zu berücksichtigen, daß bei einer Änderung einer Adresse eines Datenobjekts 36 - z.B. nach der Anlage eines aktualisierten Objektkopfes - auch alle dem Datenobjekt 36 zugeordneten Einträge 52, 54 in den Caches 30, 32 aktualisiert werden müssen. Hierfür kann entweder die neue Zieladresse in das Verweisfeld PTR eingetragen werden, oder der Eintrag 52, 54 kann durch Rücksetzen des Merkmals VALID als ungültig gekennzeichnet werden.

Insgesamt können durch die vorliegende Erfindung in den oben beschriebenen Ausgestaltungen sowohl Schreib- als auch Lesezugriffe auf den nichtflüchtigen überschreibbaren Speicher 26 erheblich beschleunigt werden. Dies gilt insbesondere für Speicher mit großen Segmenten 34x. Die Erfindung eignet sich zur Speicherverwaltung in nichtflüchtigen überschreibbaren Speichern 26, die als Flash-Speicher oder in anderen Speichertechnologien ausgestaltet sind.

## Patentansprüche

1. Verfahren zum Verwalten von Datenobjekten (36) in einem nichtflüchtigen überschreibbaren Speicher (26), welcher in Segmente (34x) untergliedert ist, wobei durch jeden Löschvorgang jeweils mindestens ein Segment (34x) in seiner Gesamtheit gelöscht wird, und welcher einen Grundzustand aufweist, wobei durch einen Schreibzugriff Speicherzellen des nichtflüchtigen überschreibbaren Speichers (26) nur von dem Grundzustand in einen beschriebenen Zustand überführt werden können, wobei jedes Datenobjekt (36) einen gültigen Objektkopf (42, 50) und einen davon getrennt verwalteten gültigen Objektkörper (44, 46, 48) aufweist und für jedes Datenobjekt (36) eine verkettete Objektkopfliste (38) mit mindestens einem Objektkopf (42, 42', 50) und eine verkettete Objektkörperliste (40) mit mindestens einem Objektkörper (44, 44', 46, 46', 48) geführt wird, wobei der letzte Objektkopf (42, 50) in der Objektkopfliste (38) den für das Datenobjekt (36) gültigen Objektkopf (42, 50) darstellt und der letzte Objektkörper (44, 46, 48) in der Objektkörperliste (40) den für das Datenobjekt (36) gültigen Objektkörper (44, 46, 48) darstellt, wobei jeder Objektkopf (42, 42', 50) in der Objektkopfliste (38) ein Verweisfeld (C-HDR-PTR) aufweist, das im letzen Objektkopf (42, 50) in der Objektkopfliste (38) unbeschrieben, aber beschreibbar ist, und das in jedem vorhergehenden Objektkopf (42') einen Verweis auf den jeweils nächsten Objektkopf (50) in der Objektkopfliste (38) enthält, und wobei jeder Objektkörper (44, 44', 46, 46', 48) in der Objektkörperliste (40) ein Verweisfeld (C-BODY-PTR) aufweist, das im letzten Objektkörper (44, 46, 48) in der Objektkörperliste (40) unbeschrieben, aber beschreibbar ist, und das in jedem vorhergehenden Objektkörper (44', 46') einen Verweis auf den jeweils nächsten Objektkörper (44, 46, 48) in der Objektkörperliste (40) enthält.

2. Verfahren nach Anspruch 1, **dadurch gekennzeichnet, daß** zum Ändern der im bisher gültigen Objektkopf (42') enthaltenen Daten ein neuer Objektkopf (50) mit den geänderten Daten und einem unbeschriebenen Verweisfeld (C-HDR-PTR) angelegt wird und in das Verweisfeld (C-HDR-PTR) des bisher gültigen Objektkopfes (42') ein Verweis auf den neuen Objektkopf (50) eingeschrieben wird, wodurch der bisher gültige Objektkopf (42') als ungültiger Objektkopf (42') gekennzeichnet wird und der neue Objektkopf (50) als neuer gültiger Objektkopf (50) gekennzeichnet wird.

3. Verfahren nach Anspruch 1 oder Anspruch 2, **dadurch gekennzeichnet, daß** jeder Objektkopf (42, 42', 50) zwei Sicherungsfelder (EDC, EDC2) zur Sicherung der Datenintegrität im Objektkopf (42, 42', 50) enthält, wobei beim Anlegen des Objektkopfes (42, 50) das erste Sicherungsfeld (EDC) mit einem Sicherungscode beschrieben wird und das zweite Sicherungsfeld (EDC2) leer gelassen wird, und wobei beim Eintragen eines Verweises in das Verweisfeld (C-HDR-PTR) des Objektkopfes (42') das zweite Sicherungsfeld (EDC2) mit einem neuen Sicherungscode beschrieben wird.

4. Verfahren nach einem der Ansprüche 1 bis 3, **dadurch gekennzeichnet, daß** zum Zugreifen auf Daten im Objektkopf (42, 50) die Objektkopfliste (38) durchlaufen wird, bis der letzte Objektkopf (42, 50) in der Objektkopfliste (38) als gültiger Objektkopf (42, 50) erreicht ist.

5. Verfahren nach Anspruch 1, **dadurch gekennzeichnet, daß** zum Ändern der im bisher gültigen Objektkörper (44', 46') enthaltenen Daten ein neuer Objektkörper (46, 48) mit den geänderten Daten und einem unbeschriebenen Verweisfeld (C-BODY-PTR) angelegt wird und in das Verweisfeld (C-BODY-PTR) des bisher gültigen Objektkörpers (44', 46') ein Verweis auf den neuen Objektkörper (46, 48) eingeschrieben wird, wodurch der bisher gültige Objektkörper (44', 46') als ungültiger Objektkörper (44', 46') gekennzeichnet wird und der neue Objektkörper (46, 48) als neuer gültiger Objektkörper (46,48) gekennzeichnet wird.

6. Verfahren nach Anspruch 1, **dadurch gekennzeichnet, daß** jeder Objektkörper (44, 44', 46, 46', 48) zwei Sicherungsfelder (EDC, EDC2) zur Sicherung der Datenintegrität im Objektkörper (44, 44', 46, 46', 48) enthält, wobei beim Anlegen des Objektkörpers (44, 46, 48) das erste Sicherungsfeld (EDC) mit einem Sicherungscode beschrieben wird und das zweite Sicherungsfeld (EDC2) leer gelassen wird, und wobei beim Eintragen eines Verweises in das Verweisfeld (C-BODY-PTR) des Objektkörpers (44', 46') das zweite Sicherungsfeld (EDC2) mit einem neuen Sicherungscode beschrieben wird.

7. Verfahren nach einem der Ansprüche 1 bis 6, **dadurch gekennzeichnet, daß** zum Zugreifen auf Daten im Objektkörper (44, 46, 48) die Objektkörperliste (40) durchlaufen wird, bis der letzte Objektkörper (44, 46, 48) in der Objektkörperliste (40) als gültiger Objektkörper (44, 46, 48) erreicht ist.

8. Verfahren nach einem der Ansprüche 1 bis 7, **dadurch gekennzeichnet, daß** der gültige Objektkopf (42, 50) einen Verweis (BODY-PTR) auf einen Objektkörper (44, 44', 46, 46', 48) in der Objektkörperliste (40) aufweist, und daß diesem Verweis (BODY-PTR) zum Zugreifen auf Daten des Datenobjekts (36) gefolgt wird.

9. Verfahren nach einem der Ansprüche 1 bis 8, **dadurch gekennzeichnet, daß** der gültige Objektkopf (42, 50) Verwaltungs- und/oder Zustandsinformationen enthält, und daß der gültige Objektkörper (44, 46, 48) Nutzdaten (DATA) enthält.

10. Verfahren nach einem der Ansprüche 1 bis 9, **dadurch gekennzeichnet, daß** die in der Objektkopfliste (38) und/oder in der Objektkörperliste (40) enthaltenen Informationen über bisherige Zustände des Datenobjekts (36) zur Wiederherstellung früherer Zustände genutzt werden.

11. Verfahren nach einem der Ansprüche 1 bis 10, **dadurch gekennzeichnet, daß** mindestens ein Cache (30, 32) mit einer Mehrzahl von Einträgen (52, 54) vorgesehen ist, die je einen Objektbezeichner (OBJ-ID) einem Verweis (PTR) auf ein Datenobjekt (36) im nichtflüchtigen überschreibbaren Speicher (26) zuordnen.

12. Verfahren nach Anspruch 11, **dadurch gekennzeichnet, daß** der mindestens eine Cache (30, 32) einen statischen Cache (30) umfaßt, in den Einträge (52) in Abhängigkeit von einem in den Datenobjekten (36) enthaltenen Kennzeichen (CACHE-FLAG) angelegt werden.

13. Verfahren nach Anspruch 11 oder Anspruch 12, **dadurch gekennzeichnet, daß** der mindestens eine Cache (30, 32) einen dynamischen Cache (32) umfaßt, in den Einträge (52, 54) in Abhängigkeit von einer Zugriffscharakteristik auf die Datenobjekte (36) angelegt werden.

14. Verfahren nach einem der Ansprüche 1 bis 13, **dadurch gekennzeichnet, daß** der nichtflüchtige überschreibbare Speicher (26) ein Flash-Speicher ist.

15. Tragbarer Datenträger (10) mit einem Prozessor (14) und einem nichtflüchtigen überschreibbaren Speicher (26), wobei der Datenträger (10) dazu eingerichtet ist, ein Verfahren nach einem der Ansprüche 1 bis 14 auszuführen.

16. Computerprogrammprodukt mit einer Vielzahl von Programmbefehlen, die dazu eingerichtet sind, einen Prozessor (14) zur Ausführung eines Verfahrens nach einem der Ansprüche 1 bis 14 zu veranlassen.

## Claims

1. A method for managing data objects (36) in a non-volatile rewritable memory (26) that is subdivided into segments (34x), wherein by each delete operation in each case at least one segment (34x) is deleted in its entirety, and which has a basic state, wherein by a write access memory cells of the non-volatile rewritable memory (26) can only be transferred from the basic state to a written state, wherein each data object (36) has a valid object header (42, 50) and a valid object body (44, 46, 48) managed separately therefrom, and for each data object (36) a linked object header list (38) with at least one object header (42, 42', 50) and a linked object body list (40) with at least one object body (44, 44', 46, 46', 48) is maintained, wherein the last object header (42, 50) in the object header list (38) represents the valid object header (42, 50) for the data object (36) and the last object body (44, 46, 48) in the object body list (40) represents the valid object body (44, 46, 48) for the data object (36) wherein each object header (42, 42', 50) in the object header list (38) has a pointer field (C-HDR-PTR), said pointer field being blank, but writable in the last object header (42, 50) in the object header list (38) and containing in each preceding object header (42') a pointer to the respective next object header (50) in the object header list (38), and wherein each object body (44, 44', 46, 46', 48) in the object body list (40) has a pointer field (C-BODY-PTR), said pointer field being blank, but writable, in the last object body (44, 46, 48) in the object body list (40) and containing in each preceding object body (44', 46') a pointer to the respective next object body (44, 46, 48) in the object body list (40).

2. The method according to claim 1, **characterized in that** for changing the data contained in the object header (42') valid so far, a new object header (50) with the changed data and a blank pointer field (C-HDR-PTR) is created, and into the pointer field (C-HDR-PTR) of the object header (42') valid so far there is written a pointer to the new object header (50), whereby the object header (42') valid so far is marked as an invalid object header (42') and the new object header (50) is marked as the new valid object header (50).

3. The method according to claim 1 or claim 2, **characterized in that** each object header (42, 42', 50) has two securing fields (EDC, EDC2) to secure data integrity in the object header (42, 42', 50), wherein upon creating the object header (42, 50) the first securing field (EDC) is written with a security code and the second securing field (EDC2) is left blank, and wherein upon entering a pointer in the pointer field (C-HDR-PTR) of the object header (42') the second securing field (EDC2) is written with a new security code.

4. The method according to any of claims 1 to 3, **characterized in that** for accessing data in the object header (42, 50) the object header list (38) is run through until reaching the last object header (42, 50) in the object header list (38) as the valid object header (42, 50).

5. The method according to claim 1, **characterized in that** for changing the data contained in the object body (44', 46') valid so far, a new object body (46, 48) is created with the changed data and a blank pointer field (C-BODY-PTR) and a pointer to the new object body (46, 48) is written into the pointer field (C-BODY-PTR) of the object body (44', 46') valid so far, whereby the object body (44', 46') valid so far is marked as an invalid object body (44', 46') and the new object body (46, 48) is marked as the new valid object body (46, 48).

6. The method according to claim 1, **characterized in that** each object body (44, 44', 46, 46', 48) has two securing fields (EDC, EDC2) to secure data integrity in the object body (44, 44', 46, 46', 48), wherein upon creating the object body (44, 46, 48) the first securing field (EDC) is written with a security code and the second securing field (EDC2) is left blank, and wherein upon entering a pointer in the pointer field (C-BODY-PTR) of the object body (44', 46') the second securing field (EDC2) is written with a new security code.

7. The method according to any of claims 1 to 6, **characterized in that** for accessing data in the object body (44, 46, 48) the object body list (40) is run through until reaching the last object body (44, 46, 48) in the object body list (40) as the valid object body (44, 46, 48).

8. The method according to any of claims 1 to 7, **characterized in that** the valid object header (42, 50) has a pointer (BODY-PTR) to an object body (44, 44', 46, 46', 48) in the object body list (40), and that this pointer (BODY-PTR) is followed for accessing data of the data object (36).

9. The method according to any of claims 1 to 8, **characterized in that** the valid object header (42, 50) contains management and/or state information, and that the valid object body (44, 46, 48) contains payload data (DATA).

10. The method according to any of claims 1 to 9, **characterized in that** in the information about hitherto states of the data object (36) contained in the object header list (38) and/or in the object body list (40) is used for restoring previous states.

11. The method according to any of claims 1 to 10, **characterized in that** at least one cache (30, 32) is provided having a plurality of entries (52, 54), which allocate respectively one object identifier (OBJ-ID) to a pointer (PTR) to a data object (36) in the non-volatile rewritable memory (26).

12. The method according to claim 11, **characterized in that** the at least one cache (30, 32) comprises a static cache (30) in which entries (52) are created in dependence on a flag (CACHE-FLAG) contained in the data objects (36).

13. The method according to claim 11 or claim 12, **characterized in that** the at least one cache (30, 32) comprises a dynamic cache (32) in which entries (52, 54) are created in dependence on an access characteristic to the data objects (36).

14. The method according to any of claims 1 to 13, **characterized in that** the non-volatile rewritable memory (26) is a flash memory.

15. A portable data carrier (10) with a processor (14) and a non-volatile rewritable memory (48), wherein the data carrier (10) is adapted to execute a method according to any of claims 1 to 14.

16. A computer program product with a multiplicity of program commands which are adapted to cause a processor (14) to execute a method according to any of claims 1 to 14.

## Revendications

1. Procédé de gestion d'objets de données (36) dans une mémoire (26) non volatile réinscriptible, laquelle est subdivisée en segments (34x), cependant que, par chaque opération d'effacement, respectivement au moins un segment (34x) est effacé dans sa totalité, et laquelle présente un état de base, cependant que, par un accès en écriture, des cellules mémoire de la mémoire (26) non volatile réinscriptible ne peuvent être portées que de l'état de base à un état en écriture, cependant que chaque objet de données (36) présente une tête d'objet (42, 50) valable et un corps d'objet (44, 46, 48) valable géré indépendamment de cette dernière, et que, pour chaque objet de données (36), une liste de têtes d'objet (38) enchaînée comprenant au moins une tête d'objet (42, 42', 50) et une liste de corps d'objet (40) enchaînée comprenant au moins un corps d'objet (44, 44', 46, 46', 48) est entretenue, cependant que la dernière tête d'objet (42, 50) dans la liste de têtes d'objet (38) représente la tête d'objet (42, 50) valable pour l'objet de données (36), et que le dernier corps d'objet (44, 46, 48) dans la liste de corps d'objet (40) représente le corps d'objet (44, 46, 48) valable pour l'objet de données (36), cependant que chaque tête d'objet (42, 42', 50) dans la liste de têtes d'objet (38) comporte un champ de renvoi (C-HDR-PTR) qui n'est pas en écriture dans la dernière tête d'objet (42, 50) dans la liste de têtes d'objet (38) mais qui peut être mis en écriture, et qui, dans chaque tête d'objet (42') précédente, comprend un renvoi à la tête d'objet (50) respectivement suivante dans la liste de têtes d'objet (38), et cependant que chaque corps d'objet (44, 44', 46, 46', 48) dans la liste de corps d'objet (40) comporte un champ de renvoi (C-BODY-PTR) qui, dans le dernier corps d'objet (44, 46, 48) dans la liste de corps d'objet (40), n'est pas en écriture mais peut être mis en écriture, et qui, dans chaque corps d'objet (44', 46') précédent, contient un renvoi au corps d'objet (44, 46, 48) respectivement suivant dans la liste de corps d'objet (40).

2. Procédé selon la revendication 1, **caractérisé en ce que**, pour la modification des données contenues dans la tête d'objet (42') valable jusque-là, une nouvelle tête d'objet (50) comportant les données modifiées et un champ de renvoi (C-HDR-PTR) n'étant pas en écriture est mis en place, et que, dans le champ de renvoi (C-HDR-PTR) de la tête d'objet (42') valable jusque-là, un renvoi à la nouvelle tête d'objet (50) est écrit, ce par quoi la tête d'objet (42') valable jusque-là est identifiée comme tête d'objet (42') caduque et la nouvelle tête d'objet (50) est désignée comme nouvelle tête d'objet (50) valable.

3. Procédé selon la revendication 1 ou la revendication 2, **caractérisé en ce que** chaque tête d'objet (42, 42', 50) contient deux champs de sauvegarde (EDC, EDC2) pour la sauvegarde de l'intégrité des données dans la tête d'objet (42, 42', 50), cependant que, lors de la mise en place de la tête d'objet (42, 50), le premier champ de sauvegarde (EDC) est mis en écriture avec un code de sauvegarde, et que le deuxième champ de sauvegarde (EDC2) est laissé vide, et cependant que, lors de l'entrée d'un renvoi dans le champ de renvoi (C-HDR-PTR) de la tête d'objet (42'), le deuxième champ de sauvegarde (EDC2) est mis en écriture avec un nouveau code de sauvegarde.

4. Procédé selon une des revendications de 1 à 3, **caractérisé en ce que**, pour l'accès à des données dans la tête d'objet (42, 50), la liste de têtes d'objet (38) est parcourue jusqu'à ce que la dernière tête d'objet (42, 50) dans la liste de têtes d'objet (38) soit atteinte comme tête d'objet (42, 50) valable.

5. Procédé selon la revendication 1, **caractérisé en ce que**, pour la modification des données contenues dans le corps d'objet (44', 46') valable jusque-là, un nouveau corps d'objet (46, 48) comportant les données modifiées et un champ de renvoi (C-BODY-PTR) n'étant pas en écriture est mis en place, et que, dans le champ de renvoi (C-BODY-PTR) du corps d'objet (44', 46') valable jusque-là, un renvoi au nouveau corps d'objet (46, 48) est écrit, ce par quoi le corps d'objet (44', 46') valable jusque-là est désigné comme corps d'objet (44', 46') caduque et le nouveau corps d'objet (46, 48) est désigné comme nouveau corps d'objet (46, 48) valable.

6. Procédé selon la revendication 1, **caractérisé en ce que** chaque corps d'objet (44, 44', 46, 46', 48) contient deux champs de sauvegarde (EDC, EDC2) pour la sauvegarde de l'intégrité des données dans le corps d'objet (44, 44', 46, 46', 48), cependant que, lors de la mise en place du corps d'objet (44, 46, 48), le premier champ de sauvegarde (EDC) est mis en écriture avec un code de sauvegarde, et que le deuxième champ de sauvegarde (EDC2) est laissé vide, et cependant que, lors de l'entrée d'un renvoi dans le champ de renvoi (C-BODY-PTR) du corps d'objet (44', 46'), le deuxième champ de sauvegarde (EDC2) est mis en écriture avec un nouveau code de sauvegarde.

7. Procédé selon une des revendications de 1 à 6, **caractérisé en ce que**, pour l'accès à des données dans le corps d'objet (44, 46, 48), la liste de corps d'objet (40) est parcourue jusqu'à ce que le dernier corps d'objet (44, 46, 48) dans la liste de corps d'objet (40) soit atteinte comme corps d'objet (44, 46, 48) valable.

8. Procédé selon une des revendications de 1 à 7, **caractérisé en ce que** la tête d'objet (42, 50) valable comporte un renvoi (BODY-PTR) à un corps d'objet (44, 44', 46, 46', 48) dans la liste de corps d'objet (40), et **en ce que** ce renvoi (BODY-PTR) est suivi pour l'accès à des données de l'objet de données (36).

9. Procédé selon une des revendications de 1 à 8, **caractérisé en ce que** la tête d'objet (42, 50) valable contient des informations de gestion et/ou d'état, et **en ce que** le corps d'objet (44, 46, 48) valable contient des données utiles (DATA).

10. Procédé selon une des revendications de 1 à 9, **caractérisé en ce que** les informations sur des états antérieurs de l'objet de données (36) contenues dans la liste de têtes d'objet (38) et/ou dans la liste de corps d'objet (40) sont utilisées pour le rétablissement d'anciens états.

11. Procédé selon une des revendications de 1 à 10, **caractérisé en ce qu'**au moins un cache (30, 32) comportant une pluralité d'entrées (52, 54) est prévu, lesquelles affectent respectivement un identifiant d'objet (OBJ-ID) à un renvoi (PTR) à un objet de données (36) dans la mémoire (26) non volatile réinscriptible.

12. Procédé selon la revendication 11, **caractérisé en ce que** le au moins un cache (30, 32) comprend un cache statique (30) dans lequel des entrées (52) sont mises en place en fonction d'un identifiant (CACHE-FLAG) contenu dans les objets de données (36).

13. Procédé selon la revendication 11 ou la revendication 12, **caractérisé en ce que** le au moins un cache (30, 32) comprend un cache dynamique (32) dans lequel des entrées (52, 54) sont mises en place en fonction d'une caractéristique d'accès aux objets de données (36).

14. Procédé selon une des revendications de 1 à 13, **caractérisé en ce que** la mémoire (26) non volatile réinscriptible est une mémoire flash.

15. Support de données portable (10) comprenant un processeur (14) et une mémoire (26) non volatile réinscriptible, le support de données portable (10) étant conçu pour exécuter un procédé selon une des revendications de 1 à 14.

16. Produit programme d'ordinateur comportant une pluralité d'instructions de programme conçues pour amener un processeur (14) à exécuter un procédé selon une des revendications de 1 à 14.
